Europäisches Patentamt

(19) European Patent Office

Office européen des brevets

(11) **EP 1 073 257 B1**

(12) **EUROPEAN PATENT SPECIFICATION**

(45) Date of publication and mention
of the grant of the patent:
**09.06.2004 Bulletin 2004/24**

(51) Int Cl.$^7$: **H04N 1/32**

(21) Application number: **99114740.6**

(22) Date of filing: **28.07.1999**

(54) **Method for generating a security document**

Verfahren zur Erzeugung eines Sicherheitsdokuments

Procédé de génération d'un document de sécurité

(84) Designated Contracting States:
**AT BE CH CY DE DK ES FI FR GB GR IE IT LI LU
MC NL PT SE**

(43) Date of publication of application:
**31.01.2001 Bulletin 2001/05**

(73) Proprietors:
• **Orell Füssli Security Printing Ltd.
8036 Zürich (CH)**
• **ECOLE POLYTECHNIQUE FEDERALE DE
LAUSANNE
1015 Lausanne (CH)**

(72) Inventors:
• **Hersch, Roger D.
1015 Lausanne (CH)**

• **Rudaz, Nicolas
1015 Lausanne (CH)**

(74) Representative: **Blum, Rudolf Emil Ernst
c/o E. Blum & Co
Patentanwälte
Vorderberg 11
8044 Zürich (CH)**

(56) References cited:
**EP-A- 0 590 884        EP-A- 0 642 060
EP-A- 0 705 022        WO-A-97/43736**

• **KUTTER M ET AL: "DIGITAL WATERMARKING
OF COLOR IMAGES USING AMPLITUDE
MODULATION" JOURNAL OF ELECTRONIC
IMAGING,US,SPIE + IS&T, vol. 2, no. 7, page
326-332 XP000750388 ISSN: 1017-9909**

**Description**

The present invention relates to a method for generating a security document and to a security document obtained by this method according to the preamble of the independent claims. In particular, it relates to the field of security printing, and more particularly it relates to anti-counterfeiting measures for identity documents showing a photograph of their holder.

Many identity documents bear a photograph of the document holder, because this photograph offers a convenient way of relating the document to its owner. The development of plastic card printers and the advances in digital imagery have lead to the widespread use of identity documents printed on plastic cards, such as ID cards, driving licenses and access key cards.

With the advance of color printers and copiers, it has become easy to forge such documents unless they are provided with security features, such as digital watermarks, microscopic text, etc. Such security features are, however, difficult to apply or to verify and they often impair the overall appearance of the document.

A current method for applying a security pattern to a document is described in WO 97/43736, in particular on page 69, line 32 - page 70, line 4 and page 72, line 13 - page 74, line 10. Here, a security pattern is added to a photograph, wherein the security pattern is e.g. chosen to be orthogonal to the photograph.

The problem to be solved by the present application lies therefore in providing a method and document of this type that has high security. This problem is solved by the independent claims.

Hence, at least some of the points of the original image are modified by changing their color. The change of color is a function of the original color $C_{ij}$, of the value $p_{ij}$ of a security pattern as well as of a local average $\alpha_k$ of the pattern. By using a function that depends on a local average of the pattern, it becomes possible to generate very flexible security markings that take the pattern's features into account. The protected image is difficult to imitate by using commercial image-processing packages because the changes in the protected image do not occur along a fixed direction of the color space, but vary according to the color of the original image pixels and the averages of the security pattern.

The embedded pattern can e.g. be textual information already present elsewhere on the document, or it can be a code derived from data specific to the document holder. The protection can be made fully apparent, partly apparent, or completely invisible under normal viewing conditions.

In a preferred aspect of the invention, a chromatic shift is given for any color of the original image. This shift is defined by the two colors that are used when the pattern value takes its minimum and maximum values. In this case, the function f can e.g. consist of a linear interpolation between the two colors of the chromatic shift.

The chromatic shift can be derived from a reference shift at one specific color K. Preferably, a correcting offset is applied to this reference shift for balancing it according to the local average $\alpha_k$ of the pattern. The chromatic shift can be calculated by correcting the luminance, hue and saturation of the reference shift (or the corrected reference shift). A further possible correction adjusts the values of the chromatic shift to make its CIE-Lab luminance difference equal to the one of the reference shift, which results in a uniformly contrasted pattern for any original color value.

The protected image is difficult to reproduce through photo-mechanic means such as a photocopying device, because the chromatic shifts it contains can be specified as quasi-metameric pairs of colors. Either the pairs of colors are perceived as identical by the device and the embedded information is completely lost, or the pairs of colors are perceived as being more different than they really are and the embedded information becomes much more visible under normal light than it is in the protected image.

Identity documents containing images with embedded text are even more difficult to forge, because the embedded text can contain an encrypted version of the personal information present elsewhere on the document. Without knowledge of the process used for encrypting the text, it is impossible to adapt an existing document to a fake identity by replacing the photograph and the personal information.

The invention is especially suited for marking identity documents, such as driver's licenses.

Further preferred features and embodiments are described in the dependent claims as well as in the description, which makes reference to the figures. These show:

Fig. 1 a single character and its corresponding gray level (top row) as well as the equality of two areas having the same local average,
Fig. 2 the LEF color space,
Fig. 3 a bitmap pattern for a given string,
Fig. 4 the calculation of the average value for a letter bitmap,
Fig. 5 the balancing of the reference shift,
Fig. 6 the assembly of a text into its pattern,
Fig. 7 the repetitive arrangement of the pattern of Fig. 6,
Fig. 8 the repetitive arrangement of the pattern of Fig. 7,

Fig. 9 the staggering of the pattern on Fig. 8,
Fig. 10 the individual balanced reference shifts of differing letters,
Fig. 11 the horizontal interpolation of the reference shifts,
Fig. 12 the vertical interpolation of the reference shifts,
Fig. 13 the luminance correction,
Fig. 14 the hue correction,
Fig. 15 the saturation correction, and
Fig. 16 the overflow correction.

A preferred embodiment of a method that protects identity documents by embedding text into photographs is described hereafter. The method consists of the following basic steps: A reference chromatic shift (the "reference shift") is specified in a linear color space. Each character of the text to embed is rasterized into a bitmap. The reference shift is corrected for obtaining a coverage-balanced chromatic shift ("corrected chromatic shift") derived for each rasterized character according to the ratio between the surface occupied by black pixels (foreground) and the surface occupied by white pixels (background), i.e. according to a local average of the security pattern. The rasterized character string is repeated horizontally and vertically to form a security pattern. A pattern-relative chromatic shift is interpolated between the coverage-balanced chromatic shifts of the neighboring bitmap characters for each pixel in the security pattern. A chromatically shifted color is extrapolated from the pattern-relative chromatic shifts for each pixel of the original image. The protected image is generated and output on a continuous-tone printer. Depending on the size and orientation of the reference chromatic shift, the embedded text in the protected image can be visible or invisible under normal viewing conditions.

Chromatic shifts:

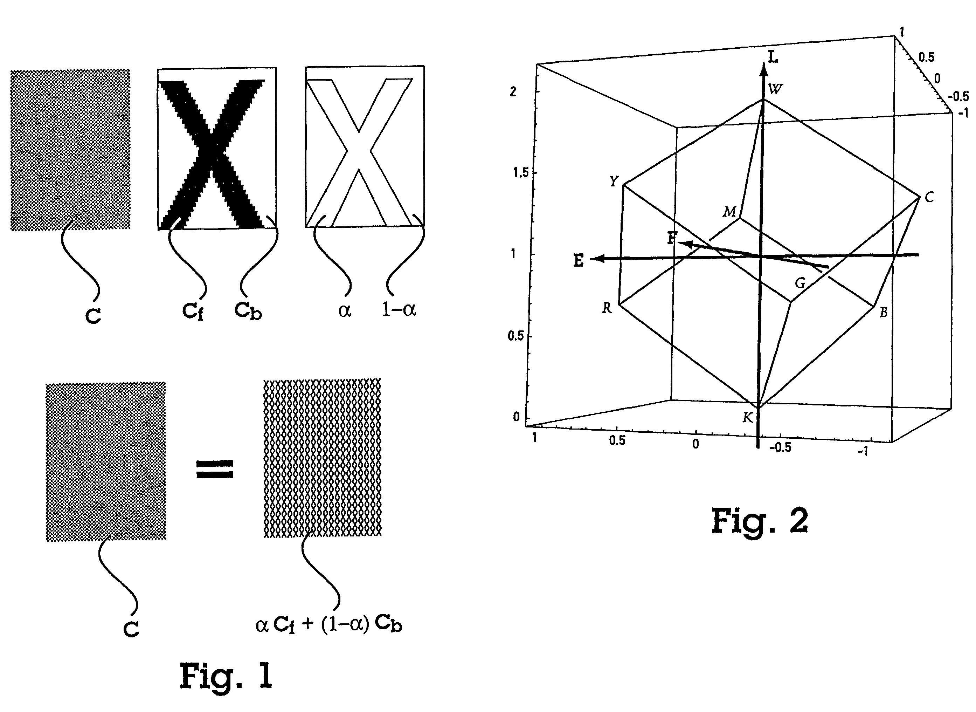

A "chromatic shift" is defined as a set of three colors C, $C_b$ and $C_f$ such that a surface of unitary area colored with C is visually equivalent to the same surface split in two foreground and background parts of area $\alpha$, resp. 1 - $\alpha$, with the foreground having color $C_f$ and the background having color $C_b$ (Fig. 1). Mathematically, the colors of a chromatic shift must verify the relation $C = \alpha\, C_f + (1 - \alpha)\, C_b$. C represents the reference color, $C_b$ represents the reference background color, and $C_f$ represents the reference foreground color.

An additive color space is used for specifying the colors of a chromatic shift. Preferably, this color space is obtained by a linear transformation of the cube formed by the RGB space. The transformation and its inverse are defined by the following equations:

$$
\begin{bmatrix} L \\ E \\ F \end{bmatrix} = \begin{bmatrix} \dfrac{2}{3} & \dfrac{2}{3} & \dfrac{2}{3} \\ 1 & -\dfrac{1}{2} & -\dfrac{1}{2} \\ 0 & \dfrac{\sqrt{3}}{2} & -\dfrac{\sqrt{3}}{2} \end{bmatrix} \cdot \begin{bmatrix} R \\ G \\ B \end{bmatrix} \quad \text{and} \quad \begin{bmatrix} R \\ G \\ B \end{bmatrix} = \begin{bmatrix} \dfrac{1}{2} & \dfrac{3}{2} & 0 \\ \dfrac{1}{2} & -\dfrac{1}{3} & \dfrac{1}{\sqrt{3}} \\ \dfrac{1}{2} & -\dfrac{1}{3} & -\dfrac{1}{\sqrt{3}} \end{bmatrix} \cdot \begin{bmatrix} L \\ E \\ F \end{bmatrix} \quad (1)
$$

After transformation, the RGB cube stands on its black corner (Fig. 2). Its black-white axis is vertical and becomes the L-axis in the newly defined LEF color coordinate space. The two other E and F orthogonal axes are lying in the plane perpendicular to the L-axis through point L = 0 (the EF-plane). The E-axis goes through the projection of vertex R of the RGB cube on plane EF. The vertical L component can be assimilated to the achromatic value of a given color, i.e. its luminance level. The E and F components convey the chromatic information pertaining to that color.

Choosing the reference shift:

The reference shift {K, $K_b$, $K_f$} for an arbitrary color K is specified by an interactive color picking application according to N. Rudaz, R. D. Hersch, V. Ostromoukhov, Specifying color differences in a linear color space (LEF), Proceedings of the IS&T/SID 97, Scottsdale, 1997, pp. 197-202.

Creating a partial security pattern:

The string of characters forming the text to embed into the image is converted into a bitmap image through the use of a font rendering software component. Suitable types of font renderers are known to a person skilled in the art and are e.g. described in R.D. Hersch, "Font Rasterization, the State of Art", in "Visual and Technical Aspects of Type", Ed. R.D. Hersch, Cambridge University Press, 1993, pp56-63.. An example of a font renderer is the FreeType engine described at the URL http://www.freetype.org/intro.htm.

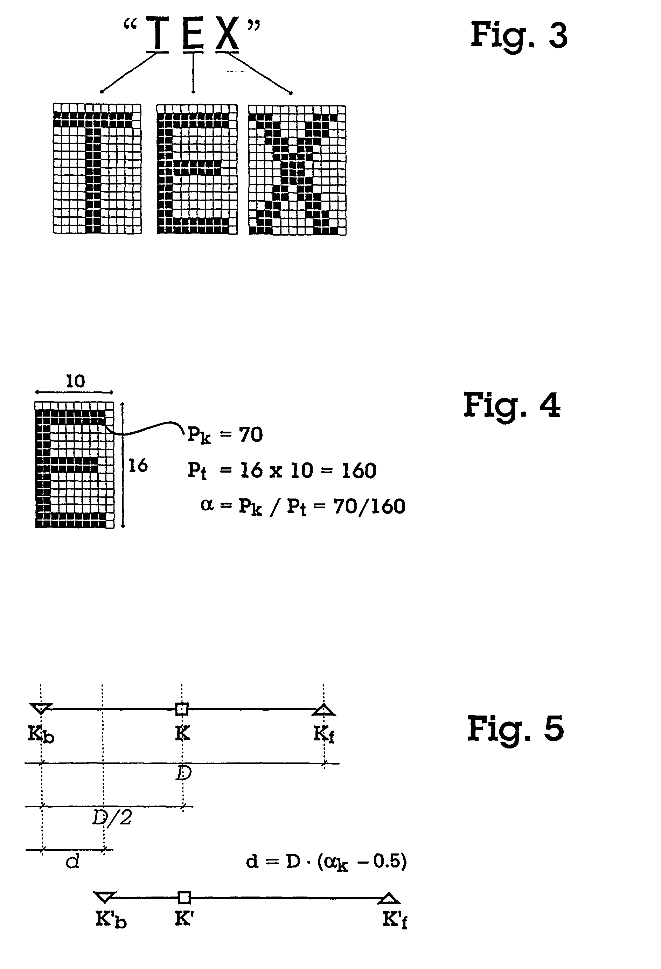

The font rasterizer creates a rectangular bitmap for each character in the string of text (Fig. 3), which will form part of the security pattern.

Local averaging:

In the case of a binary bitmap, local averages $\alpha_k$, defined as the black coverage percentage, are calculated for each character bitmap. $\alpha_k$ lies between 0 and 1; it is defined as the ratio between the number $P_k$ of foreground pixels and total number $P_t$ of pixels or, in other words, if a pattern value $p_{ij}$ of 1 is assigned to the foreground pixels and a pattern value $p_{ij}$ of 0 to the background pixels, $\alpha_k$ corresponds to the average of the pattern values (Fig. 4).

Correcting the reference shift:

A coverage-balanced chromatic shift $\{K, K_b', K_f'\}$ is derived from the reference shift $\{K, K_b, K_f\}$ for each character bitmap. The chromatic distance $D = K_b - K_f$ is computed. An offset d is derived from D using the relation

$$d = D \cdot (\alpha_k - (p_{max} - p_{min})/2)/(p_{max} - p_{min}).$$

wherein $p_{min}$ and $p_{max}$ are the largest and smallest possible pattern values (for binary patterns we usually have $p_{max} = 1$ and $p_{min} = 0$).

This offset d is added to $K_b$ and to $K_f$ in order to obtain $K_b'$ and $K_f'$ (Fig. 5):

$$K_b' = K_b + d, \tag{2}$$

$$K_f' = K_f + d$$

The resulting coverage-balanced chromatic shift $\{K, K_b', K_f'\}$ exhibits the property that, if the white pixels of the associated character bitmap are colored with $K_b'$ and the black pixels with $K_f'$, then the average color of the character bitmap is equal to K.

Generating the security pattern:

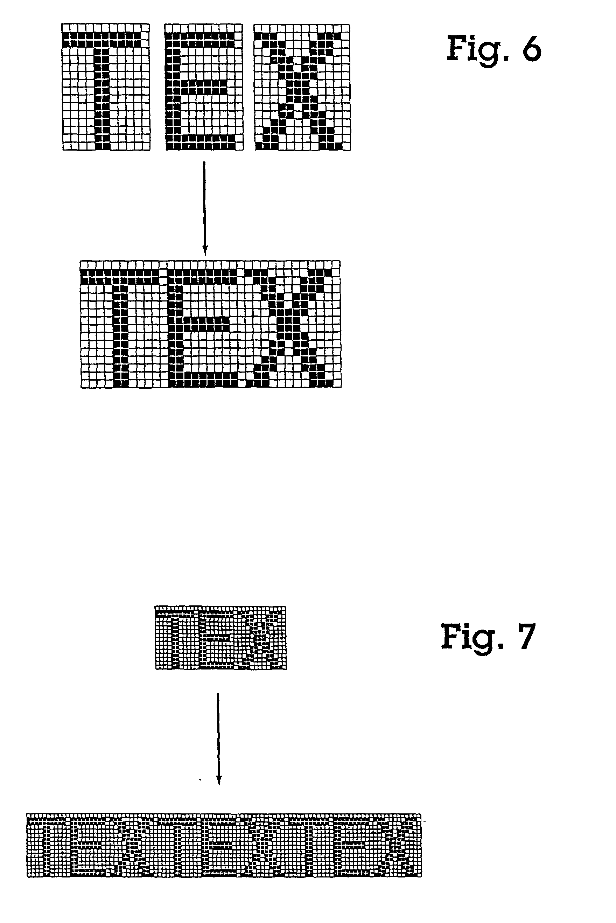

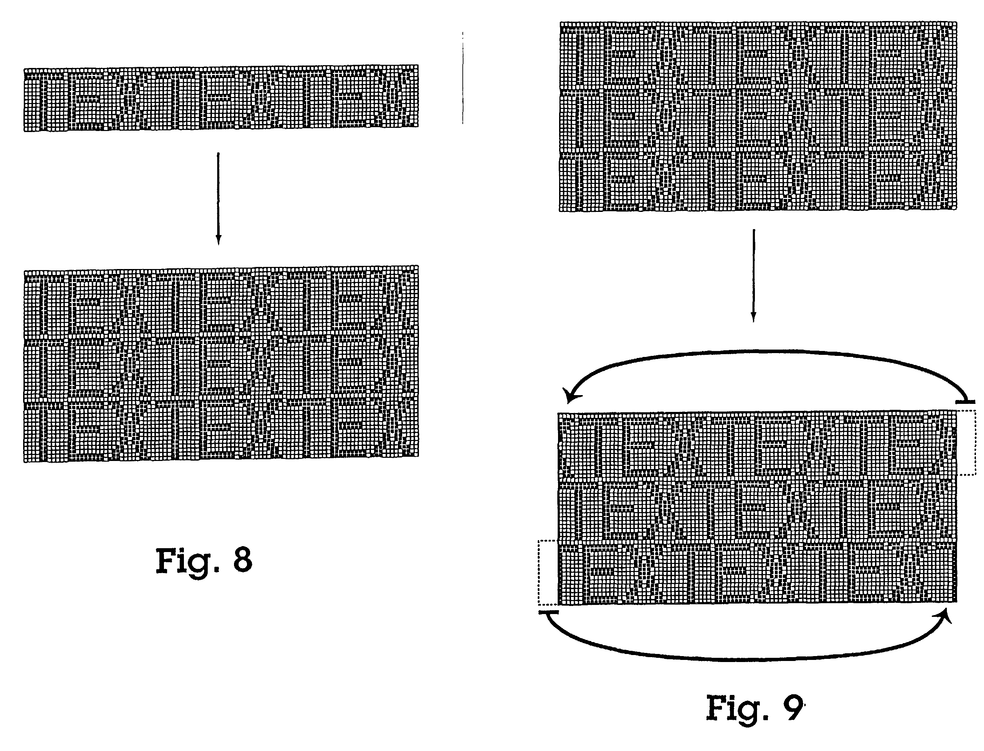

The rasterized characters are horizontally juxtaposed into a rectangular tile (Fig. 6). This tile is horizontally repeated side by side as many times as necessary in order to produce a second bitmap with the same width as the original image (Fig. 7). The second bitmap is vertically replicated side by side as many times as necessary in order to produce a third bitmap image with the same height as the original image (Fig. 8). At each vertical repetition, the second bitmap is shifted horizontally in order to avoid disturbing optical artifacts that appear when characters are vertically aligned in a text. After the horizontal shift, the portion of the second bitmap that goes beyond the horizontal boundaries of the original image is wrapped around (Fig. 9). This third bitmap is referred to as the security pattern and constitutes an image of the text that will be embedded into the original image.

Calculating the pattern-relative chromatic shifts:

A pattern-relative chromatic shift is computed for every pixel of the security pattern, based on the coverage-balanced chromatic shifts associated with the character bitmaps.

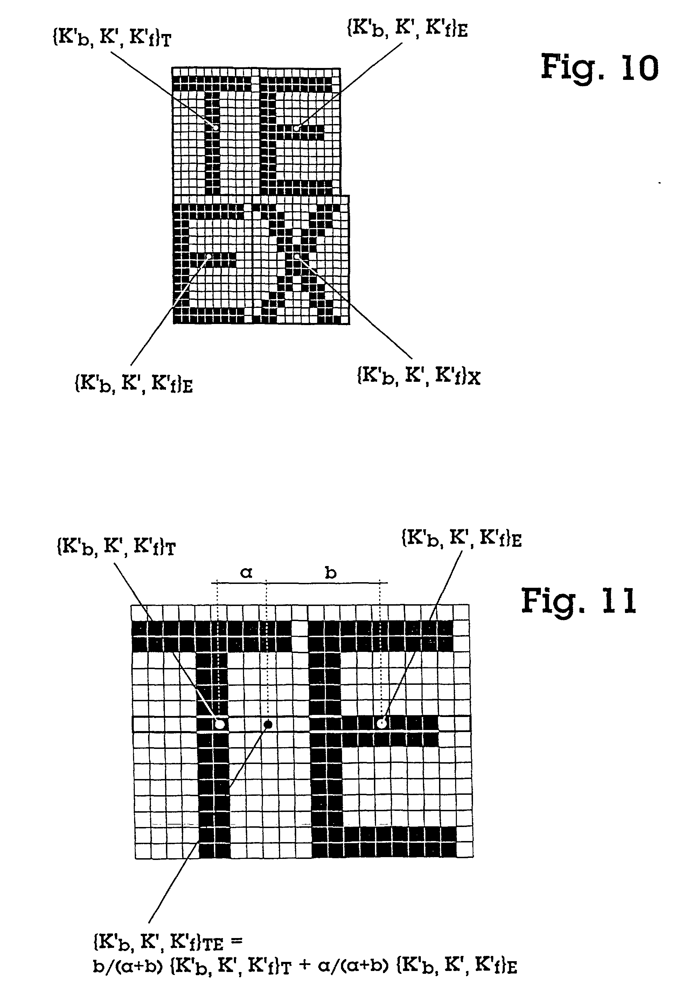

In a first step, every pixel of the security pattern that is located at the center of a character bitmap is associated with that bitmap's coverage-balanced chromatic shift (Fig. 10).

In a second step, every pixel of the security pattern that is located on a horizontal line segment joining two centers of the character bitmaps is associated with a pattern-relative chromatic shift that is obtained by linear interpolation between the coverage-balanced chromatic shifts associated with these two centers (Fig. 11).

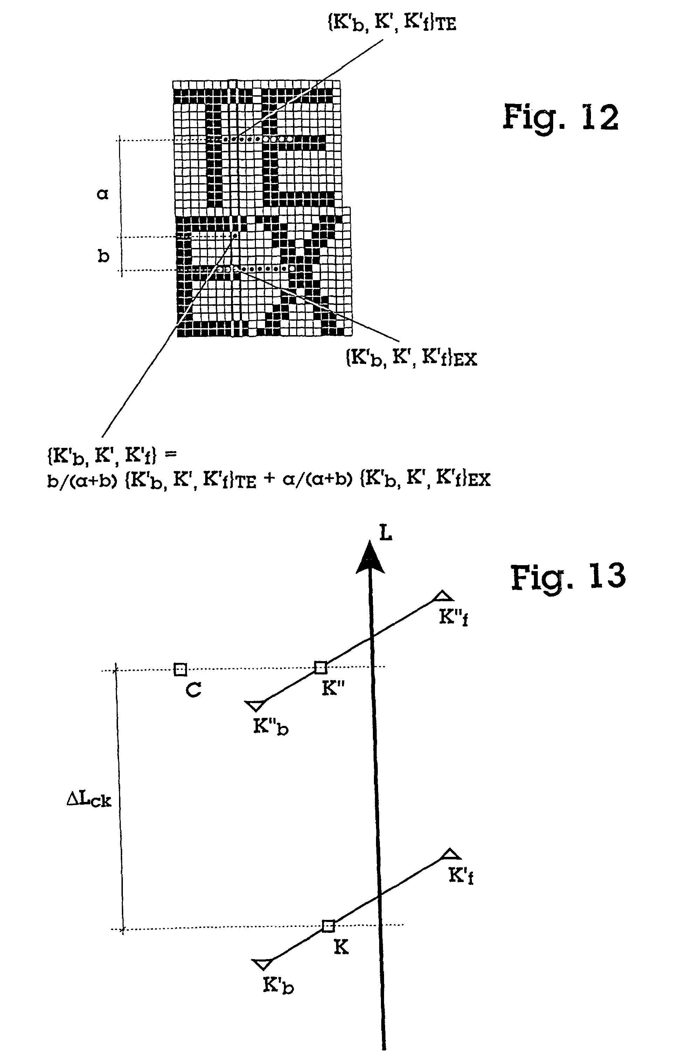

In a third step, every pixel of the security pattern that is located on a vertical line segment joining two pixels processed during the second step is associated with a pattern-relative chromatic shift that is linearly interpolated between the pattern-relative chromatic shifts of these two pixels (Fig. 12).

In a fourth step, every pixel of the security pattern that has not been processed during the previous steps is associated with the pattern-relative chromatic shift of its nearest neighbor.

Calculating the chromatic shift:

Each pixel in the security pattern is associated with a pixel having the same coordinates in the original image. The pattern-relative chromatic shift undergoes a geometrical transformation in the LEF color space, with the purpose of adapting its background and foreground colors ($K_b'$ and $K_f'$), so that the color resulting from the average $\alpha_k$ of the adapted background and foreground colors is equal to the color $C_{ij} = (L_C, E_C, F_C)$ of the associated original pixel.

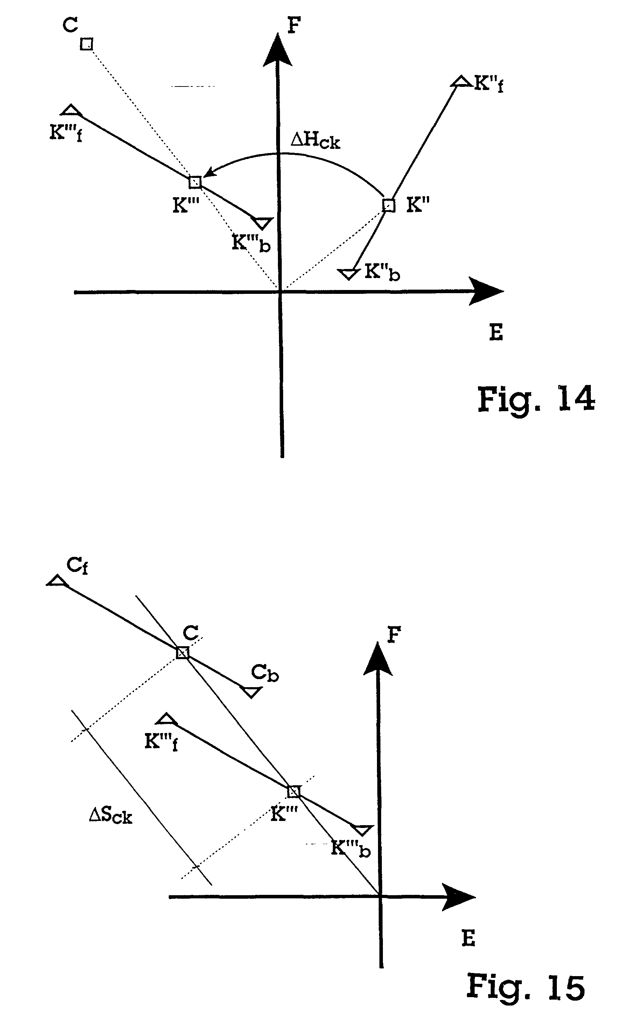

In a first step, the luminance of the chromatic shift is corrected according to the luminance difference between the reference color K and the color $C_{ij}$. For this purpose, the luminance difference $\Delta L_{CK}$ between $C_{ij}$ and $K = (L_K, E_K, F_K)$ is computed using the relation

$$\Delta L_{CK} = L_C - L_K, \tag{3}$$

and this luminance difference is added to K', $K_b'$ and $K_f'$ in order to obtain the colors K", $K_b''$, and $K_f''$ (Fig. 13).

In a second step, the hue of the chromatic shift is corrected according to the hue difference between the reference color K and the color $C_{ij}$. For this purpose, the angular hue difference ($\Delta H_{CK}$) between C and K" is computed using the relation

$$\Delta H_{CK} = Tan(Arctan(F_C/E_C) - Arctan(F_K''/E_K'')), \tag{4}$$

and this angular hue difference is added to K", $K_b''$ and $K_f''$ in order to obtain the colors K''', $K_b'''$ and $K_f'''$ (Fig. 14).

In a third step, the saturation of the chromatic shift is corrected according to the saturation difference between the reference color K and the color $C_{ij}$. For this purpose, the saturation difference ($\Delta S_{CK}$) between C and K''' is computed using the relation

$$\Delta S_{CK} = sqrt((F_K''' - E_C)^2 + (E_K''' - E_C)^2), \tag{5}$$

and this saturation difference is added to $K_B'''$ and $K_F'''$ in order to obtain the colors $C_b$ and $C_f$ (Fig. 15).

**[0035]** - In a fourth step, the CIE-Lab luminance difference between $C_b$ and $C_f$ is adjusted so that it is equal to the CIE-Lab luminance difference between $K_b$ and $K_f$ while maintaining the balanced average of $C_b$ and $C_f$ at color $C_{ij}$

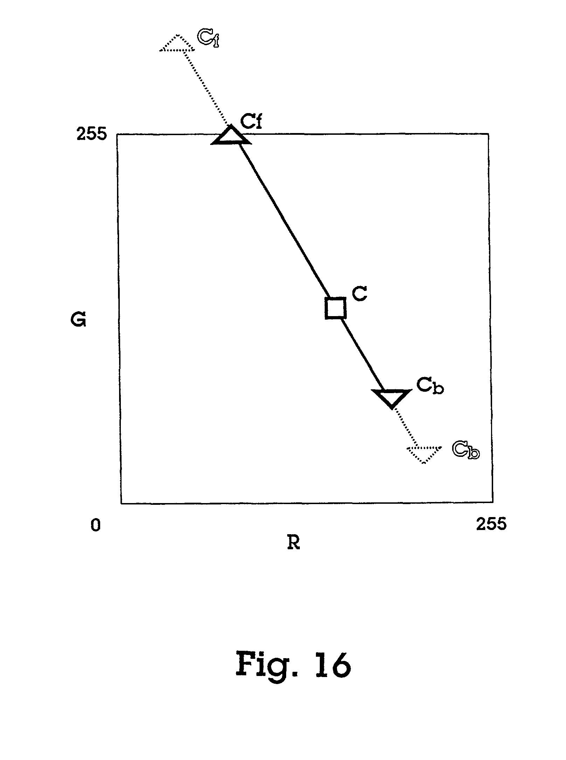

In a fifth step, the colors $C_b$ and $C_f$ are examined to see if they fit in the RGB color space. If this is not the case, the distance between $C_b$ and $C_f$ is proportionally reduced until both colors fit entirely into the RGB space (Fig. 16).

Applying the chromatic shift:

In a sixth step, the value $p_{ij}$ of the security pattern pixel associated with the original image pixel is examined. If this pixel is white (e.g. corresponding to $p_{ij} = 0$), and therefore belongs to the background of the security pattern, then the color $C_b$ is assigned to the pixel of the original image. If this pixel is black ($p_{ij} = 1$), and therefore belongs to the foreground of the security pattern, then the color $C_f$ is assigned to the pixel of the original image. In general, for non-binary security patterns, the new color $C_{ij}'$ is calculated from

$$C_{ij}' = C_b(C_{ij}) \cdot (p_{ij} - p_{min}) / (p_{max} - p_{min}) +$$

$$C_f(C_{ij}) \cdot (p_{max} - p_{ij}) / (p_{max} - p_{min}), \tag{6}$$

where $p_{min}$ and $p_{max}$ are the minimum and maximum possible pattern values $p_{ij}$.

Printing the modified image:

The modified image is output on a continuous-tone printer such as a dye-sublimation printer. Dithering devices that apply halftone screens on the images they print, such as laser printers or ink-jet printers, are not suitable for printing the protected images because the dithering process alters the structure of the embedded text.

Detection of the embedded text:

If the reference shift $\{K, K_b, K_f\}$ presents a large enough contrast, the embedded text is readable under normal viewing conditions. Conversely, if the reference shift $\{K, K_b, K_f\}$ presents a weak contrast, the embedded text is invisible and a close inspection or image analysis is required in order to read it.

Remarks:

The order of the various steps described above can be changed. In particular, the average values $\alpha_k$ can be calculated after the security pattern of Fig. 9 is generated, and the steps for correcting the luminance, hue and saturation of the color shift are interchangeable.
The local averages $\alpha_k$ have been calculated as the averages over the individual characters of the security pattern. It is, however, also possible to use other averaging techniques. In particular, the security pattern can be processed by a low pass filter, where each point is e.g. replaced by a weighted average of itself and a number of neighboring points.
As already indicated, the security pattern may be non-binary and can e.g. consist of various gray levels, such as they may be used for representing anti-aliased characters.
In more general terms, the method described here starts from an original image and a security pattern. It calculates local averages $\alpha_k$ of the values $p_{ij}$ of the security pattern, e.g. by averaging over the bitmap of one character or by running the security pattern through a low pass filter or by using interpolation techniques of averaged values such as described by reference to Figs. 11 and 12. In particular, the local average $\alpha_k$ of an area k can e.g. be calculated from

$$\alpha_k = \Sigma\, A_{k,ij} \cdot p_{ij} \tag{7}$$

wherein $A_k$ is a matrix of weights and $\Sigma$ is the sum over the points with indices i,j in said area k. In the example above, the area k corresponds to one character bitmap and $A_{k,ij} = 1/N_k$, wherein $N_k$ is the number of points in said area.
For at least some of the points of the original image, the color $C_{ij}$ of the original image is replaced by a color $C'_{ij}$ using a function f:

$$C'_{ij} = f(C_{ij}, p_{ij}, \alpha_k),$$

wherein the function f depends on at least one local average $\alpha_k$ of an area k said point $p_{ij}$ is located in.
Preferably, f should have the property that if m and M are real numbers with $m < \alpha_k < M$, and wherein $C_m = f(C_{ij}, m, \alpha_k)$ and $C_M = f(C_{ij}, M, \alpha_k)$, and if $C_{ij}$ lies within a color space with a Euclidean metric and we define $R_m$ as the Euclidean distance between $C_m$ and $C_{ij}$ and $R_M$ as the Euclidean distance between $C_M$ and $C_{ij}$, then for any value $p_{ij}$ in the interval [m, M], the Euclidean distance between $C_{ij}$ and $f(C_{ij}, p_{ij}, \alpha_k)$ lies within the interval $[0, \max(R_m, R_M)]$. In addition to this, f should by continuous.
In other words, for pattern values that are close to the local average, f should be such that the color of the original image is changed only slightly. In this way, the appearance of the protected image remains globally identical to the appearance of the original image.
If an averaging technique according to Eq. (7) is used, f is preferably such that

$$\Sigma\, (A_{k,ij} \cdot f(C, p_{ij}, \alpha_k)) \approx C, \tag{8}$$

wherein $\Sigma$ is the sum over the points with indices i,j in said area k. This again ensures that the average color of a given local area k of the modified image is equal to the average color of the same area of the original image.
Function f can be implemented algorithmically, e.g. by providing a chromatic shift for any given color $C_{ij}$ and

any local area k. The chromatic shift is given by two colors $C_b(C_{ij})$ and $C_f(C_{ij})$, wherein the function f depends on said coverage-balanced chromatic shift in such a way that

$$f(C, p_{min}, \alpha_k) = C_b(C_{ij})$$

and

$$f(C, p_{max}, \alpha_k) = C_f(C_{ij}),$$

wherein $p_{min}$ and $p_{max}$ are the minimum and maximum possible pattern values $p_{ij}$. Between these values, f can e.g. be calculated by linear interpolation.

For calculating the chromatic shift for a given color $C_{ij}$, various methods can be used. As described above, it is e.g. possible to provide a reference shift for one reference color K. The reference shift is given by two colors $K_b$ and $K_f$, wherein K, $K_b$ and $K_f$ lie on a single line in an Euclidean additive color space and K is located in the center of $K_b$ and $K_f$. The reference shift corresponds to the chromatic shift for color $C_{ij}$ if $C_{ij}$ = K and $\alpha_k$ = $(p_{max} + p_{min})/2$. The reference shift can then be balanced e.g. using Eq. (2) above. Then, depending on the position of the colors K and $C_{ij}$, the values $C_b(C_{ij})$ and $C_f(C_{ij})$ can be derived by correcting hue, saturation and luminance, e.g. using Eqs. (3) - (5).

**Claims**

1.  A method for generating a security document by applying a security pattern to an original image for generating a modified image, wherein
    said security pattern comprises a plurality of pixels, wherein a pattern value $p_{ij}$ is attributed to each pixel (i, j) of said security pattern, and
    wherein for at least some of the pixels in said security pattern the color $C_{ij}$ of the corresponding pixel (i,j) of the original image is replaced by a modified color $C'_{ij}$, **characterized in that**
    local averages $\alpha_k$ are calculated from said pattern values for at least some areas k of said security pattern and wherein said modified color $C'_{ij}$ is calculated according to

    $$C'_{ij} = f(C_{ij}, p_{ij}, \alpha_k),$$

    wherein f is a function that depends on at least one local average $\alpha_k$ of an area k said pixel (i,j) is located in.

2.  The method of claim 1, wherein said function f is such that
    if m and M are real numbers with m < $\alpha_k$ < M, and wherein $C_m$ = $f(C_{ij}, m, \alpha_k)$ and $C_M$ = $f(C_{ij}, M, \alpha_k)$,
    and if $C_{ij}$ lies within a color space with a Euclidean metric and we define $R_m$ as the Euclidean distance between $C_m$ and $C_{ij}$ and $R_M$ as the Euclidean distance between $C_M$ and $C_{ij}$,
    then for any value $p_{ij}$ in the interval [m, M], the Euclidean distance between $C_{ij}$ and $f(C_{ij}, p_{ij}, \alpha_k)$ lies within the interval [0, $\max(R_m, R_M)$].

3.  The method of one of the preceding claims, wherein said function $f(C_{ij}, p_{ij}, \alpha_k)$ is continuous in $p_{ij}$.

4.  The method of one of the preceding claims, wherein said local averages $\alpha_k$ are calculated as a weighted sum

    $$\alpha_k = \Sigma A_{k,ij} \cdot p_{ij}$$

    wherein $A_k$ is a matrix of weights and $\Sigma$ is the sum over the pixels with indices i,j in said area k, and
    wherein said function f has the property that, for any color C of said original image in said area

    $$\Sigma (A_{k,ij} \cdot f(C, p_{ij}, \alpha_k)) \approx C.$$

5.  The method of claim 4, wherein all elements of said matrix $A_k$ are equal to $1/N_k$, wherein $N_k$ is the number of pixels in said area.

6. The method of one of the preceding claims wherein said security pattern is generated by repetitively tiling a pattern element.

7. The method of one of the preceding claims,
   wherein said security pattern comprises a plurality of characters and wherein said local areas are rectangular areas, each of said rectangular areas enclosing one character.

8. The method of one of the preceding claims further comprising the step of providing a chromatic shift for any given color $C_{ij}$ and any local area k, said chromatic shift being given by two colors $C_b(C_{ij})$ and $C_f(C_{ij})$, wherein said function f depends on said coverage-balanced chromatic shift such that

$$f(C, p_{min}, \alpha_k) = C_b(C_{ij})$$

and

$$f(C, p_{max}, \alpha_k) = C_f(C_{ij})$$

and
for $p_{min}$ and $p_{max}$ being the minimum and maximum possible pattern values $p_{ij}$.

9. The method of claim 8, wherein

$$f(C_{ij}, p_{ij}, \alpha_k) = C_b(C_{ij}) \cdot (p_{ij} - p_{min})/(p_{max} - p_{min})$$

$$+ C_f(C_{ij}) \cdot (p_{max} - p_{ij})/(p_{max} - p_{min})$$

10. The method of claim 9 further comprising the steps of
    choosing a reference shift for a reference color K, wherein said reference shift is given by two colors $K_b$ and $K_f$ and corresponds to said chromatic shift for said color $C_{ij}$ if $C_{ij} = K$ and $\alpha_k = (p_{max} + p_{min})/2$,
    calculating said chromatic shift for any other color Cij from said reference shift by transforming said two colors $K_b$ and $K_f$ as a function of color $C_{ij}$ and said local averages $\alpha_k$.

11. The method of claim 10, wherein said reference color K and said two colors $K_b$ and $K_f$ are arranged on a line in an Euclidean, additive color space, wherein $K_b - K = K - K_f$ and wherein said step of calculating said chromatic shift comprises the steps of
    calculating first corrected colors $K_b'$ and $K_f'$ from

$$K_b' = K_b + d$$

$$K_f' = K_f + d$$

with

$$d = (K_f - K_b) \cdot (\alpha_k - (p_{max} - p_{min})/2)/(p_{max} - p_{min}),$$

    and calculating said two colors $C_b(C_{ij})$ and $C_f(C_{ij})$ from said first corrected colors $K_b'$ and $K_f'$, said reference color K and said color $C_{ij}$.

12. The method of one of the claims 10 or 11 comprising the step of calculating said two colors $C_b(C_{ij})$ and $C_f(C_{ij})$
    by correcting the luminance of the chromatic shift according to the luminance difference between the reference color K and the color $C_{ij}$, and/or

by correcting the hue of the chromatic shift according to the hue difference between the reference color K and the color $C_{ij}$, and/or

by correcting the saturation of the chromatic shift according to the saturation difference between the reference color K and the color $C_{ij}$.

13. The method of claim 11 or 12 comprising the step of correcting a CIE-Lab luminance difference between said two colors $C_b(C_{ij})$ and $C_f(C_{ij})$ to make it equal to the CIE-Lab luminance difference between said two colors $K_b$ and $K_f$.

14. The method of one of the preceding claims wherein said pattern values are binary having values of 0 and 1, wherein for a pattern value of 0 the color $C_{ij}$ of the corresponding pixel of the original image is shifted in a first direction and for a pattern value of 1 the color $C_{ij}$ of the corresponding pixel of the original image is shifted in a second direction, and in particular wherein, in a given Euclidean color space, said first direction is opposite to said second direction.

15. The method of one of the preceding claims wherein said original image is a holder's photograph on an identity document.

16. The method of one of the preceding claims comprising the step of printing the modified image on a continuous-tone printer.

17. A security document obtained by the method of one of the preceding claims.

18. The security document of claim 17, wherein said security document is a driving license.

19. The security document of one of the claims 17 or 18, wherein said pattern is a text representing information that is also elsewhere visible on said document, and in particular wherein said text is at least partially encrypted.

**Patentansprüche**

1. Ein Verfahren zur Erzeugung eines Sicherheitsdokumentes durch Anwenden eines Sicherheitsmusters an einem ursprünglichen Bild um zu einem modifizierten Bild zu gelangen, wobei

das Sicherheitsmuster eine Vielzahl Pixel aufweist, wobei jedem Pixel (i,j) dieses Sicherheitsmusters ein Musterwert $p_{ij}$ zugeordnet wird, und

wobei für mindestens einige Pixel im Sicherheitsmuster die Farbe $C_{ij}$ des entsprechenden Pixel (i,j) des ursprünglichen Bildes durch eine modifizierte Farbe $C'_{ij}$ ersetzt wird, **dadurch gekennzeichnet, dass**

lokale Durchschnitte $\alpha_k$ aus den Musterwerten für mindestens einige Bereiche k des Sicherheitsmusters berechnet werden und wobei die modifizierte Farbe $C'_{ij}$ gemäss

$$C'_{ij} = f(C_{ij}, p_{ij}, \alpha_k)$$

berechnet wird, wobei f eine Funktion ist, die von mindestens einem lokalen Durchschnitt $\alpha_k$ eines Bereiches k abhängt, in welchem sich das Pixel (i,j) befindet.

2. Das Verfahren von Anspruch 1, wobei die Funktion f derart ist, dass
wenn m und M reelle Zahlen sind mit $m < \alpha_k < M$, und wenn $C_m = f(C_{ij}, m, \alpha_k)$ und $C_M = f(C_{ij}, M, \alpha_k)$, und wenn $C_{ij}$ in einem Farbraum mit einer euklidischen Metrik liegt und wir $R_m$ als die euklidische Distanz zwischen $C_m$ und $C_{ij}$ definieren und $R_M$ als die euklidische Distanz zwischen $C_M$ and $C_{ij}$,
dann liegt für einen beliebigen Wert $p_{ij}$ im Intervall [m, M] die euklidische Distanz zwischen $C_{ij}$ und $f(C_{ij}, p_{ij}, \alpha_k)$ im Intervall $[0, \max(R_m, R_M)]$.

3. Das Verfahren von einem der vorangehenden Ansprüche, wobei die Funktion $f(C_{ij}, p_{ij}, \alpha_k)$ in $p_{ij}$ stetig ist.

4. Das Verfahren von einem der vorangehenden Ansprüche, wobei die lokalen Durchschnitte $\alpha_k$ als eine gewichtete Summe

$$\alpha_k = \Sigma \, A_{k,ij} \cdot p_{ij}$$

berechnet werden, wobei $A_k$ eine Matrix von Gewichten ist und $\Sigma$ die Summe über die Pixel mit Indizes i,j im Bereich k, und

wobei die Funktion f für jede Farbe C des ursprünglichen Bildes im Bereich die Eigenschaft

$$\Sigma \, (A_{k,ij} \cdot f(C, p_{ij}, \alpha_k)) \approx C$$

hat.

5. Das Verfahren von Anspruch 4, wobei alle Elemente der Matrix $A_k$ gleich $1/N_k$ sind, wobei $N_k$ die Zahl der Pixel im Bereich ist.

6. Das Verfahren von einem der vorangehenden Ansprüche, wobei das Sicherheitsmuster durch wiederholtes Kacheln eines Musterelementes erzeugt wird.

7. Das Verfahren von einem der vorangehenden Ansprüche, wobei das Sicherheitsmuster eine Vielzahl von Zeichen enthält, und wobei die lokalen Bereiche rechtekkige Bereiche sind und jeder der rechteckigen Bereiche ein Zeichen einschliesst.

8. Das Verfahren von einem der vorangehenden Ansprüche, wobei dieses zusätzlich den Schritt aufweist eine chromatische Verschiebung für eine beliebige gegebene Farbe $C_{ij}$ und einen beliebigen Bereich k zu bestimmen, wobei die chromatische Verschiebung durch zwei Farben $C_b(C_{ij})$ und $C_f(C_{ij})$ gegeben ist, wobei die Funktion f derart von der deckungsabgeglichenen chromatischen Verschiebung abhängt, dass

$$f(C, p_{min}, \alpha_k) = C_b(C_{ij})$$

und

$$f(C, p_{max}, \alpha_k) = C_f(C_{ij})$$

und
wobei $p_{min}$ und $p_{max}$ die kleinsten und grössten möglichen Musterwerte $p_{ij}$ sind.

9. Das Verfahren von Anspruch 8, wobei

$$f(C_{ij}, p_{ij}, \alpha_k) = C_b(C_{ij}) \cdot (p_{ij} - p_{min}) / (p_{max} - p_{min})$$

$$+ \, C_f(C_{ij}) \cdot (p_{max} - p_{ij}) / (p_{max} - p_{min})$$

10. Das Verfahren von Anspruch 9, wobei dieses zusätzlich die Schritte aufweist
    eine Referenzverschiebung für eine Referenzfarbe K zu wählen, wobei die Referenzverschiebung durch zwei Farben $K_b$ und $K_f$ gegeben ist und der chromatischen Verschiebung für die Farbe $C_{ij}$ entspricht, falls $C_{ij} = K$ und $\alpha_k = (p_{max} + p_{min})/2$,
    die chromatische Verschiebung für jegliche andere Farbe $C_{ij}$ aus der Referenzverschiebung durch Transformation der zwei Farben $K_b$ und $K_f$ als eine Funktion von Farbe $C_{ij}$ und den lokalen Durchschnitten $\alpha_k$ zu berechnen.

11. Das Verfahren von Anspruch 10, wobei die Referenzfarbe K und die zwei Farben $K_b$ und $K_f$ auf einer Linie in einem euklidischen, additiven Farbraum angeordnet werden, wobei $K_b - K = K - K_f$ und wobei der Schritt der Berechnung der chromatischen Verschiebung die Schritte umfasst
    die ersten korrigierten Farben $K_b'$ und $K_f'$ aus

$$K_b' = K_b + d$$

$$K_f' = K_f + d$$

mit

$d = (K_f - K_b) \cdot (\alpha_k - (p_{max} - p_{min}) / 2) / (p_{max} - p_{min})$ zu berechnen und

die zwei Farben $C_b(C_{ij})$ und $C_f(C_{ij})$ aus den ersten korrigierten Farben $K_b'$ und $K_f'$, der Referenzfarbe K und der Farbe $C_{ij}$ zu berechnen,

12. Das Verfahren von einem der Ansprüche 10 oder 11, welches den Schritt aufweist die zwei Farben $C_b(C_{ij})$ und $C_f$ $(C_{ij})$ dadurch zu berechnen, dass

die Helligkeit der chromatischen Verschiebung gemäss der Helligkeitsdifferenz zwischen der Referenzfarbe K und der Farbe $C_{ij}$ korrigiert wird, und/oder

der Farbton der chromatischen Verschiebung gemäss der gemäss der Farbtondifferenz zwischen der Referenzfarbe K und der Farbe $C_{ij}$ korrigiert wird, und/oder

die Sättigung der chromatischen Verschiebung gemäss der Sättigungsdifferenz zwischen der Referenzfarbe K und der Farbe $C_{ij}$ korrigiert wird.

13. Das Verfahren von Anspruch 11 oder 12, welches den Schritt aufweist die CIE-Lab Helligkeitsdifferenz zwischen den zwei Farben $C_b(C_{ij})$ und $C_f(C_{ij})$ zu korrigieren um sie der CIE-Lab Helligkeitsdifferenz zwischen den Farben $K_b$ und $K_f$ anzugleichen.

14. Das Verfahren von einem der vorangehenden Ansprüche, wobei die Musterwerte binär sind und die Werte 0 und 1 haben, wobei für einen Musterwert von 0 die Farbe $C_{ij}$ des entsprechenden Pixel des ursprünglichen Bildes in eine erste Richtung geschoben wird, und für einen Musterwert von 1 die Farbe $C_{ij}$ des entsprechenden Pixel des ursprünglichen Bildes in eine zweite Richtung verschoben wird, und insbesondere dabei in einem gegebenen euklidischen Farbraum die erste Richtung der zweiten Richtung entgegengesetzt ist.

15. Das Verfahren von einem der vorangehenden Ansprüche, wobei das ursprüngliche Bild eine Fotografie des Inhabers auf einem Identitätsdokument ist.

16. Das Verfahren von einem der vorhergehenden Ansprüche, welches den Schritt aufweist, das modifizierte Bild auf einem Halbtondrucker zu drucken.

17. Ein Sicherheitsdokument, welches mit einem Verfahren der vorangehenden Ansprüche hergestellt wurde.

18. Das Sicherheitsdokument von Anspruch 17, wobei das Sicherheitsdokument ein Führerschein ist.

19. Das Sicherheitsdokument eines der Ansprüche 17 oder 18, wobei das Muster ein Text ist welcher Information wiedergibt, welche auch anderswo auf dem Dokument sichtbar ist, und insbesondere dabei der Text mindestens teilweise verschlüsselt ist.

**Revendications**

1. Méthode pour produire un document sécurisé par application d'un motif de sécurité sur une image d'origine afin d'obtenir une image modifiée,

le motif de sécurité comprenant plusieurs pixels, une valeur de motif $p_{ij}$ étant attribuée à chaque pixel (i,j) du motif de sécurité,

la couleur $C_{ij}$ du pixel correspondant de l'image d'origine étant remplacée pour au moins certains pixels du motif de sécurité par une couleur $C'_{ij}$ modifiée, **caractérisée en ce qu'**on

calcule pour au moins certaines régions k dudit motif de sécurité et à partir desdites valeurs de motif, des moyennes locales $\alpha_k$, ladite couleur modifiée $C'_{ij}$ étant calculée selon la formule

$$C'_{ij} = f(C_{ij}, p_{ij}, \alpha_k),$$

où f est une fonction qui dépend d'au moins une moyenne locale $\alpha_k$ d'une région k dans laquelle se trouve ledit pixel (i, j).

2. Méthode selon la revendication 1, la fonction f étant choisie de façon à ce que
   si m et M sont des nombres réels et si l'on a: $C_m = f(C_{ij}, m, \alpha_k)$ et $C_M = f(C_{ij}, M, \alpha_k)$
   et si $C_{ij}$ est défini dans un espace de couleurs possédant une métrique euclidienne, et que $R_m$ désigne la distance euclidienne entre $C_m$ et $C_{ij}$, et $R_M$ celle entre $C_M$ et $C_{ij}$,
   alors pour toute valeur $p_{ij}$ dans l'intervalle [m, M], la distance euclidienne entre $C_{ij}$ et $f(C_{ij}, p_{ij}, \alpha_k)$ est comprise dans l'intervalle $[0, \max(R_m, R_M)]$.

3. Méthode selon une des revendications précédentes, **caractérisée en ce que** la fonction $f(C_{ij}, p_{ij}, \alpha_k)$ est continue en $p_{ij}$.

4. Méthode selon une des revendications précédentes, les moyennes locales $\alpha_k$ étant calculées sous forme d'une somme pondérée

$$\alpha_k = \Sigma\, A_{k,ij} \cdot p_{ij}$$

où $A_k$ est une matrice contenant des poids, et où $\Sigma$ est la somme calculée pour tous les pixels ayant des indices i, j dans ladite région k, et
où la fonction f est telle que pour toute couleur C de l'image d'origine l'on ait:

$$\Sigma\, (A_{k,\,ij} \cdot f(C, p_{ij}, \alpha_k)) \approx C.$$

5. Méthode selon la revendication 4, dans laquelle tous les éléments de la matrice $A_k$ sont égaux à $1/N_k$, où $N_k$ est le nombre de pixels dans ladite région.

6. Méthode selon une des revendications précédentes dans laquelle le motif de sécurité est généré par carrelage répétitif d'un élément de dessin.

7. Méthode selon une des revendications précédentes dans laquelle le motif de sécurité comporte plusieurs caractères et où les régions locales sont des régions rectangulaires contenant chacune un caractère.

8. Méthode selon une des revendications précédentes comportant en outre une étape où l'on effectue un déplacement chromatique de toute couleur donnée $C_{ij}$ et de toute région locale k, ce déplacement étant déterminé par deux couleurs $C_b(C_{ij})$ et $C_f(C_{ij})$,
   où la fonction f dépend dudit déplacement chromatique à valeur corrigée, de façon à ce que

$$f(C, p_{min}, \alpha_k) = C_b(C_{ij})$$

et

$$f(C, p_{max}, \alpha_k) = C_f(C_{ij})$$

où $p_{min}$ et $p_{max}$ sont les valeurs minimale et maximale des valeurs de motif possibles $p_{ij}$.

9. Méthode selon la revendication 8, où

$$f(C_{ij}, p_{ij}, \alpha_k) = C_b(C_{ij}) \cdot (p_{ij} - p_{min}) / (p_{max} - p_{min})$$

$$+ C_f(C_{ij}) \cdot (p_{max} - p_{ij}) / (p_{max} - p_{min}).$$

10. Méthode selon la revendication 9 comportant en outre les étapes suivantes:

choix d'un déplacement de référence pour une couleur de référence K, ce déplacement de référence étant déterminé par deux couleurs $K_b$ et $K_f$ et correspondant audit déplacement chromatique pour la couleur $C_{ij}$ lorsque $C_{ij}$ = K et $\alpha_k$ = $(p_{max} + p_{min})/2$,

calcul du déplacement chromatique pour toute autre couleur $C_{ij}$ à partir du déplacement de référence par transformation des deux couleurs $K_b$ et $K_f$ au moyen d'une fonction de la couleur $C_{ij}$ et des moyennes locales $\alpha_k$.

**11.** Méthode selon la revendication 10, dans laquelle la couleur de référence K et les deux couleurs $K_b$ et $K_f$ sont placées sur une droite dans un espace de couleurs euclidien et additif, où l'on a $K_b$-K = K-$K_f$ et où ledit calcul du déplacement chromatique comprend les étapes suivantes:

calcul de deux premières couleurs corrigées $K_b$' et $K_f$' au moyen des formules

$$K_b' = K_b + d$$

$$K_f' = K_f + d,$$

avec

$$d = (K_f - K_b) \cdot (\alpha_k - (p_{max} - p_{min})/2)/(p_{max} - p_{min}),$$

et calcul des deux couleurs $C_b(C_{ij})$ et $C_f(C_{ij})$ à partir des deux premières couleurs corrigées $K_b$' et $K_f$', de la couleur de référence K et de la couleur $C_{ij}$.

**12.** Méthode selon une des revendications 10 ou 11, comportant le calcul des deux couleurs $C_b(C_{ij})$ et $C_f(C_{ij})$

en corrigeant la luminance du déplacement chromatique selon la différence de luminance entre la couleur de référence K et la couleur $C_{ij}$, et/ou

en corrigeant la teinte du déplacement chromatique selon la différence de teinte entre la couleur de référence K et la couleur $C_{ij}$, et/ou

en corrigeant la saturation du déplacement chromatique selon la différence de saturation entre la couleur de référence K et la couleur Cij.

**13.** Méthode selon une des revendications 11 ou 12 comportant la correction d'une différence de luminance CIE-Lab entre les couleurs $C_b(C_{ij})$ et $C_f(C_{ij})$ afin de la rendre égale à la différence de luminance CIE-Lab entre les deux couleurs $K_b$ et $K_f$.

**14.** Méthode selon une des revendications précédentes, **caractérisée en ce que** les valeurs de motif sont binaires et prennent les valeurs 0 et 1, la couleur $C_{ij}$ du pixel correspondant de l'image d'origine étant déplacée dans une première direction lorsque la valeur de motif est égale à 0 et dans une seconde direction lorsque la valeur de motif est égale à 1, et en particulier **en ce que** dans une espace de couleurs euclidien donné la première direction est à l'opposé de la seconde direction.

**15.** Méthode selon une des revendications précédentes dans laquelle l'image d'origine est la photographie du propriétaire sur un document d'identité.

**16.** Méthode selon une des revendications précédentes comportant une étape où l'image modifiée est imprimée sur une imprimante à pigmentation continue.

**17.** Document sécurisé obtenu par la méthode selon une des revendications précédentes.

**18.** Document selon la revendication 17 où le document sécurisé est un permis de conduire.

**19.** Document selon une des revendication 17 ou 18, où le dessin est un texte représentant une information qui est également lisible à un autre emplacement du document, en particulier dans le cas où ce texte est au moins par-tiellement chiffré.

C          C_f   C_b        α      1−α

C          $\alpha\,C_f + (1-\alpha)\,C_b$

**Fig. 1**

**Fig. 2**

EP 1 073 257 B1

Fig. 3

Fig. 4

$P_k = 70$

$P_t = 16 \times 10 = 160$

$\alpha = P_k / P_t = 70/160$

Fig. 5

$d = D \cdot (\alpha_k - 0.5)$

Fig. 6

Fig. 7

Fig. 9

Fig. 8

$\{K'_b, K', K'_f\}_T$

$\{K'_b, K', K'_f\}_E$

Fig. 10

$\{K'_b, K', K'_f\}_E$

$\{K'_b, K', K'_f\}_X$

$\{K'_b, K', K'_f\}_T$

$\{K'_b, K', K'_f\}_E$

$\alpha$

$b$

Fig. 11

$\{K'_b, K', K'_f\}_{TE} =$
$b/(\alpha+b) \{K'_b, K', K'_f\}_T + \alpha/(\alpha+b) \{K'_b, K', K'_f\}_E$

18

$\{K'_b, K', K'_f\}$TE

**Fig. 12**

α

b

$\{K'_b, K', K'_f\}$EX

$\{K'_b, K', K'_f\} =$
b/(α+b) $\{K'_b, K', K'_f\}$TE + α/(α+b) $\{K'_b, K', K'_f\}$EX

L

**Fig. 13**

$K''_f$

C

$K''$

$K''_b$

$\Delta L_{ck}$

$K'_f$

K

$K'_b$

Fig. 14

Fig. 15

# Fig. 16